# FASCICULE DE BREVET EUROPEEN

(11) **EP 2 851 506 B1**
(45) Date de publication et mention de la délivrance du brevet: **25.04.2018**
(21) Numéro de dépôt: 14306306.3
(22) Date de dépôt: 25.08.2014
(51) Int. Cl.: E21B 49/08

(54) **PRÉLÈVEUR DE FLUIDE SOUS PRESSION POUR LA SURVEILLANCE DE L'EXPLOITATION D'UN SITE GÉOLOGIQUE**
FLUID-PROBENNAHMEGERÀT UNTER DRUCK ZUR ÜBERWACHUNG DES ABBAUS EINER GEOLOGISCHEN STÄTTE
PRESSURISED FLUID SAMPLER FOR MONITORING THE EXPLOITATION OF A GEOLOGICAL SITE

(30) Priorité: 24.09.2013 FR 1359196
(43) Date de publication de la demande: 25.03.2015
(73) Titulaire: IFP Energies nouvelles, 92500 Rueil-Malmaison (FR)
(72) Inventeur: Garcia, Bruno, 92500 Rueil Malmaison (FR); Tricard, Jean, 91550 Paray Vieille Poste (FR); Fernandes-Marto, M. Claudio, 78300 Poissy (FR); Rouchon, Virgile, 92210 Saint-Claud (FR); Walrave, Thierry, 84400 Apt (FR)

(56) Documents cités:
- WO-A1-2013/122477
- FR-A1- 2 983 898
- US-A- 3 858 649
- US-A1- 2004 129 070
- US-A1- 2006 076 144
- US-B1- 6 182 753

## Description

L'invention concerne le domaine technique de l'exploitation de milieu souterrain, telle l'exploitation de réservoir de gaz (stockage/soutirage de gaz, exploitation de gaz) et la surveillance de ces opérations (contamination des opérations sur les aquifères). L'invention concerne notamment le domaine de la surveillance de site géologique de stockage de gaz, tel que le dioxyde de carbone (CO₂) ou le méthane. D'autres domaines tels que la récupération assistée d'hydrocarbures par l'injection de CO₂ par exemple ou l'exploitation de gaz de roches mères sont également concernés par cette invention.

En particulier, l'invention concerne les dispositifs d'échantillonnage de fluides, et plus particulièrement un dispositif de prélèvement de fluides sous pression dans un puits, une canalisation, un tube, un conduit, un réservoir ou équivalent.

Des fluides présents dans des puits ont besoin d'être prélevés pour déterminer leur composition, afin de caractériser les réservoirs géologiques atteints par le puits et leur évolution dans le temps au cours du procédé industriel de stockage et/ou de production. C'est notamment le cas pour la surveillance de site géologique de stockage de gaz.

Pour suivre l'évolution des fluides injectés au sein d'un milieu poreux, de nombreuses techniques ont été développées par les industriels.

On connaît par exemple des méthodes de surveillance géochimique de sites de stockage géologique de CO₂, basées sur l'étude des espèces volatiles. Des exemples de ces méthodes sont décrits dans les demandes de brevet FR 2.972.758 et FR 2.974.358.

Ces méthodes s'appliquent principalement au niveau de deux compartiments :
- au niveau du réservoir/aquifères salins où l'objectif principal est de quantifier le CO₂ dissous et précipité et donc d'établir un réel bilan de masse ;
- au niveau des aquifères sus-jacents à la roche de couverture ("cap-rock") où l'objectif principal est de diagnostiquer une fuite le plus précocement possible.

Pour mettre en oeuvre ces méthodes, il est donc nécessaire de disposer d'un dispositif de prélèvement de fluides sous pression dans un puits foré à travers une formation géologique. Un tel dispositif est appelé échantillonneur ou préleveur.

On connaît des échantillonneurs dits FTS (de l'anglais Flow Through Sampler), permettant d'obtenir des échantillons de fluide à partir d'un puits foré à travers une formation géologique. Un tel dispositif se compose d'une chambre à échantillon avec une soupape à ressort à chaque extrémité. Un mécanisme de verrouillage relie les vannes et les maintient ensemble ouvertes. Au-dessus de la chambre, il existe une horloge pour programmer l'heure de fermeture, et un mécanisme de déclenchement pour libérer les vannes. L'extrémité inférieure a des moyens pour permettre au fluide de pénétrer. Au sommet, il y a une prise de câble pour fixer un câble.

On connaît du brevet US5945611 un dispositif de prélèvement de fluides sous pression dans une canalisation, un tuyau, un conduit ou analogue. Ce dispositif comprend une pluralité de pistons, un corps ayant un passage commun, dans lequel lesdits pistons sont montés coulissants, une entrée latérale et un orifice de sortie latéral situé à l'intérieur de ladite voie de passage et communiquant avec le pipeline, lesdits orifices d'entrée et de sortie situés de telle sorte que le mouvement des pistons peut couvrir et découvrir lesdits orifices d'entrée et de sortie.

On connaît du brevet US5896926 un dispositif de prélèvement de fluides d'aquifère souterrain in situ en condition statique sans perturber l'environnant mais comportant un "packer" pour isoler le système de prélèvement avec la zone située au-dessus de lui ainsi qu'un système de pompage in situ dans ledit préleveur pour "aspirer" le fluide dans la chambre d'échantillonnage.

La demande de brevet WO 2013122477 décrit un préleveur comprenant une chambre d'échantillonnage. Le volume d'échantillonnage de la chambre est limité deux pistons, et est relié par une vanne à un volume interne du préleveur qui comporte le fluide à prélever.

On connaît également de la demande de brevet français, dont le numéro de dépôt est FR 12/03.329 (non encore publiée) un dispositif de prélèvement comportant d'une part un piston contrôlé par un ressort baignant dans une chambre d'huile pour échantillonner le fluide, et d'autre part, un second piston pour expulser le fluide lors du transfert. Le dispositif est maintenu en position ouverte ou fermée par le ressort comprimé logé dans la chambre remplie d'huile. L'huile contenue dans la chambre du ressort permet d'amortir l'effet de décompression et de réaliser le prélèvement sans à-coup. Le dispositif permet la récupération du fluide échantillonné grâce à l'action mécanique d'un piston solide au travers d'une vanne manuelle. Cette conception permet de s'affranchir des systèmes à mercure ou de système de piston fluide, et de pouvoir récupérer tout ou partie du fluide dans des conditions de pression contrôlée. De plus, cette conception permet de s'affranchir d'une chambre de compensation et d'une chambre d'huile comme utilisées dans la quasi-totalité des préleveurs connus. Ce dispositif présente également l'avantage de pouvoir être descendu en position ouverte dans le milieu souterrain, de manière à s'affranchir des problèmes d'ouverture et pour permettre un remplissage complet de la chambre d'échantillonnage. Toutefois, le dispositif décrit dans cette demande de brevet peut poser des problèmes lors de la fermeture du préleveur, à cause de la compressibilité du fluide qui peut empêcher la remontée du premier piston.

L'invention concerne un dispositif de prélèvement d'un fluide comportant une chambre de prélèvement comprenant un piston inférieur, un piston supérieur et un piston intermédiaire. Le piston intermédiaire est déplacé de manière à garantir un volume de la chambre sensiblement constant lors de la fermeture de la chambre dans le but d'éviter les problèmes liés à l'incompressibilité du fluide prélevé.

### Le dispositif selon l'invention

L'invention concerne un dispositif de prélèvement d'au moins un fluide sous pression, comportant une chambre d'échantillonnage définissant un volume interne pour recevoir ledit fluide. Ledit dispositif comporte un piston inférieur disposé dans la partie inférieure de ladite chambre, un piston supérieur disposé dans la partie supérieure de ladite chambre, un piston intermédiaire disposé entre lesdits pistons inférieur et supérieur, des moyens de fermeture et d'ouverture de ladite chambre par déplacement dudit piston inférieur, et des moyens de déplacement dudit piston intermédiaire permettant de définir un volume sensiblement constant de ladite chambre lors de la fermeture de ladite chambre.

Selon un mode de réalisation de l'invention, le volume de ladite chambre est défini par ledit piston intermédiaire et ledit piston inférieur.

Avantageusement, ledit piston intermédiaire est à une distance sensiblement constante dudit piston inférieur en position ouverte et en position fermée de ladite chambre, ledit piston intermédiaire étant en butée contre ledit piston supérieur lorsque ladite chambre est en position fermée.

De plus, ledit dispositif peut comporter des moyens de transfert du fluide hors de la chambre, lesdits moyens de transfert comprenant des moyens pour contrôler la descente conjointe dudit piston supérieur et dudit piston intermédiaire de la partie supérieure vers la partie inférieure de ladite chambre.

Selon un autre mode de réalisation de l'invention, le volume de ladite chambre est défini par ledit piston intermédiaire et ledit piston supérieur.

Avantageusement, ledit piston intermédiaire est à une distance sensiblement constante dudit piston supérieur en position ouverte et en position fermée de ladite chambre, ledit piston intermédiaire étant en butée contre ledit piston inférieur en position ouverte et en position fermée de ladite chambre.

De préférence, lesdits pistons supérieur et inférieur sont reliés par une barre de liaison sur laquelle coulisse ledit piston intermédiaire.

De manière avantageuse, ledit piston supérieur est muni d'une ouverture permettant la circulation du fluide hors de ladite chambre, ladite ouverture pouvant être fermée par une vanne pointeau.

Ledit dispositif peut comporter, en outre, des moyens de transfert du fluide hors de la chambre, lesdits moyens de transfert comprennent des moyens pour déplacer ledit piston intermédiaire du piston inférieur vers le piston supérieur de ladite chambre.

Selon l'invention les moyens d'ouverture et de fermeture de ladite chambre comportent un élément rectiligne lié au piston inférieur et à un élément ressort, de façon à ce qu'en position ouverte ledit élément ressort est comprimé.

Avantageusement, ledit piston inférieur est équipé d'une vanne pointeau et d'un raccord Haute Pression permettant d'évacuer ledit fluide hors de la dite chambre d'échantillonnage.

En outre, l'invention concerne une utilisation du dispositif selon l'invention, dans laquelle on réalise une surveillance de l'exploitation d'un site géologique souterrain par prélèvement de fluide dans un puits de surveillance. Pour ce procédé, on réalise les étapes suivantes :
a) on actionne lesdits moyens de fermeture et d'ouverture de ladite chambre dudit dispositif de prélèvement pour le mettre en position "ouverte" ;
b) on descend le dispositif, en position « ouverte », dans le puits de surveillance ;
c) on maintient ledit dispositif en position « ouverte » à une position déterminée ;
d) on actionne lesdits moyens de fermeture et d'ouverture de ladite chambre dudit dispositif de prélèvement pour le mettre en position « fermée » ; et
e) on remonte ledit dispositif en surface.

De plus, on peut réaliser les étapes suivantes :
f) on transfère ledit fluide hors de ladite chambre du dispositif, en actionnant des moyens de transfert du fluide ; et
g) on réalise au moins une analyse du fluide prélevé.

De préférence, l'exploitation d'un site géologique souterrain consiste en la surveillance d'un site de stockage géologique de CO₂, ou en la surveillance d'un site de stockage/soutirage de gaz naturel, ou en la surveillance d'un site d'exploitation de gaz de schistes, ou en la surveillance de site de récupération assistée d'hydrocarbures par injection de gaz, notamment du CO₂.

### Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.
La figure 1 illustre le dispositif selon l'art antérieur (FR 12/03.329) en position "ouverte". La figure de droite est une coupe selon l'axe A-A de la figure de gauche.
La figure 2 représente la partie inférieure du dispositif selon l'art antérieur (FR 12/03.329).
La figure 3 illustre le dispositif selon l'art antérieur (FR 12/03.329) en position "fermée". La figure du milieu est une coupe selon l'axe B-B de la figure de gauche, et la figure de droite est une coupe selon l'axe C-C de la figure du milieu.
La figure 4 illustre un dispositif selon un premier mode de réalisation de l'invention en position "ouverte". La figure de droite est une coupe selon l'axe A-A de la figure de gauche.
La figure 5 illustre le dispositif selon le premier mode de réalisation de l'invention en position "fermée". La figure de droite est une coupe selon l'axe C-C de la figure de gauche.
La figure 6 illustre une chambre d'un dispositif selon un deuxième mode de réalisation de l'invention en position "ouverte".
La figure 7 est une vue de détail de la partie inférieure de la chambre du dispositif selon le deuxième mode de réalisation de l'invention en position "ouverte".
La figure 8 est une vue de détail de la partie supérieure de la chambre du dispositif selon le deuxième mode de réalisation de l'invention en position "ouverte".
La figure 9 illustre une chambre du dispositif selon le deuxième mode de réalisation de l'invention en position "fermée".
La figure 10 est une vue de détail de la partie supérieure de la chambre du dispositif selon le deuxième mode de réalisation en position "fermée".
La figure 11 est une vue de détail de la partie supérieure de la chambre du dispositif selon le deuxième mode de réalisation en position de transfert.
La figure 12 représente la partie centrale du dispositif selon l'invention.
La figure 13 représente la partie supérieure du dispositif selon l'invention.
La figure 14 illustre la position du dispositif selon l'art antérieur en position de "transfert". La figure du milieu est une coupe selon l'axe A-A de la figure de gauche avec la chambre remplie de fluide, et la figure de droite est une coupe selon l'axe A-A de la figure de gauche avec la chambre vidée.
La figure 15 illustre un dispositif selon le deuxième mode de réalisation de l'invention en position "ouverte". La figure de droite est une coupe selon l'axe A-A de la figure de gauche.
La figure 16 illustre un dispositif selon le deuxième mode de réalisation de l'invention en position "fermée". La figure de droite est une coupe selon l'axe B-B de la figure de gauche.

### Description détaillée de l'invention

Le dispositif pour prélever des fluides sous pression selon l'invention est basé sur le principe des échantillonneurs dit FTS (Flow Through Sampler), dans lesquels le liquide du puits circule librement à l'intérieur du dispositif.

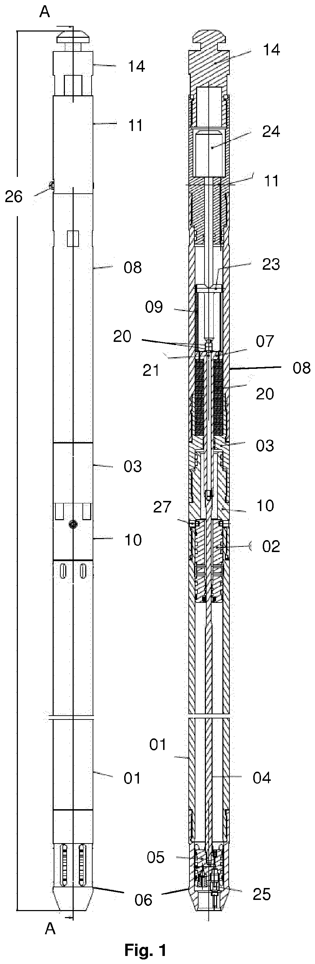

Les figures 1 à 3 illustrent le dispositif selon l'art antérieur (tel que décrit dans la demande de brevet français dont le numéro de dépôt est FR 12/03.329) pour prélever des fluides sous pression. Sur ces figures, les mêmes références ont été utilisées. Le dispositif comporte au moins :
- une chambre d'échantillonnage (01)
- un corps (10, 03, 08) surmontant ladite chambre d'échantillonnage
- des moyens de circulation pour faire circuler le fluide dans ladite chambre,
- des moyens de maintien pour maintenir le fluide dans ladite chambre, et
- des moyens de transfert pour transférer le fluide hors de ladite chambre.

Pour le préleveur selon cet art antérieur, les moyens de maintien comprennent un piston inférieur (05) adapté à autoriser ou interdire l'entrée de fluide dans la partie inférieure de ladite chambre (01), ledit piston inférieur (05) étant déplacé par des moyens comportant un élément élastique (20) placé dans une chambre remplie d'huile au sein dudit corps et relié audit piston par un élément rectiligne (04), par exemple une tige (04).

Et les moyens de transfert comprennent des moyens pour contrôler la descente d'un piston supérieur (02) de la partie supérieure vers la partie inférieure de la dite chambre, de façon à ce que ledit fluide reste à pression constante dans ladite chambre (01).

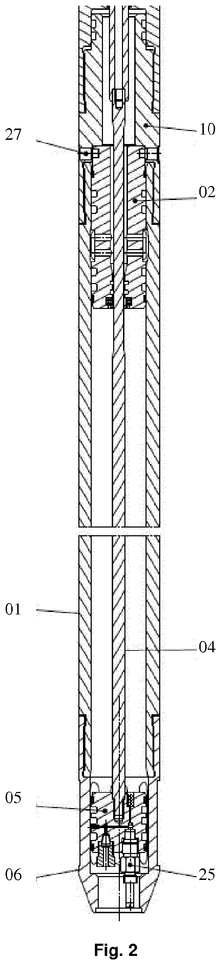

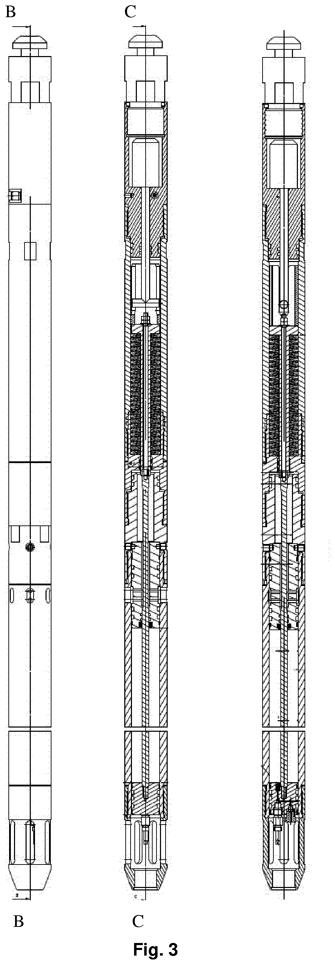

La figure 1 illustre le dispositif de l'art antérieur en position « ouverte ». La figure de droite est une coupe selon l'axe A-A de la figure de gauche. La figure 2 représente la partie inférieure du dispositif selon l'art antérieur. La figure 3 illustre le dispositif selon l'art antérieur en position « fermée ». La figure du milieu est une coupe selon l'axe B-B de la figure de gauche, et la figure de droite est une coupe selon l'axe C-C de la figure du milieu. Ainsi le dispositif selon l'art antérieur, comporte (figure 1) une chambre d'échantillonnage (01). Cette chambre a pour fonction de recevoir le fluide sous pression (en condition de fond). La chambre d'échantillonnage peut comporter une virole (01) définissant un volume interne pour recevoir le fluide. La partie inférieure de la chambre (01) peut être vissée dans un embout inférieur (06) comportant au moins un orifice pour laisser entrer le fluide. Quant à la partie supérieure de la chambre (01), elle est vissée dans un corps (10, 03, 08). La chambre comporte également un orifice dans sa partie supérieure, de façon à faire circuler le fluide au sein de la chambre (01) : le fluide pénètre par l'ouverture inférieure de la chambre, ou par l'orifice de l'embout inférieur (06), et ressort au niveau de l'orifice de la chambre (01) dans sa partie supérieure.

Le corps comprend une chambre remplie d'huile dans laquelle baigne un élément élastique (20). Cet élément élastique peut être un ressort ou un ensemble de rondelles Belleville. Il peut être relié par l'intermédiaire d'une entretoise (07) et d'une tige (04) au piston inférieur (05).

Ce piston inférieur (05) est adapté à autoriser ou interdire l'entrée du fluide sous pression dans la partie inférieure de la chambre (01). Pour ce faire, en position haute, le piston (05) est positionné au moins partiellement dans la chambre (01), à son extrémité inférieure, il en bouche l'entrée de façon étanche (le piston possède des joints par exemple). En position basse, le piston sort de la chambre (01), laissant entrer le fluide. Lorsque la chambre (01) est munie d'un embout inférieur (06), cet embout (06) a une longueur permettant au piston inférieur (5) de sortir de la chambre, et donc, de laisser entrer un fluide dans la chambre d'échantillonnage (01) via l'orifice.

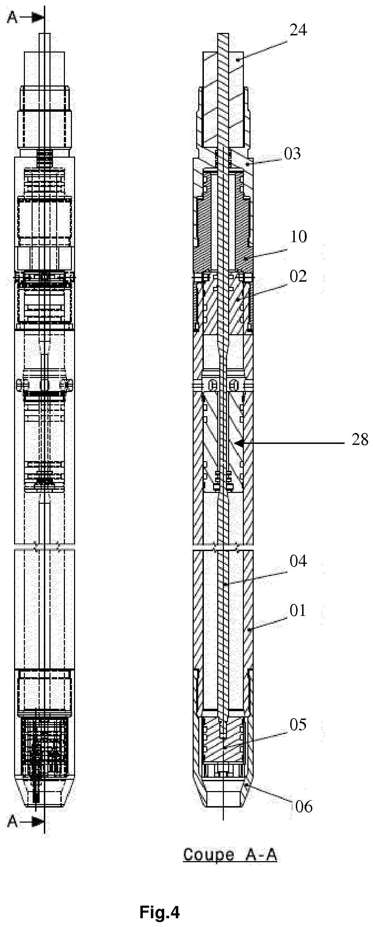

Ainsi, lorsque l'élément élastique (20) est compressé (figures 1 et 2), la tige (04) pousse (aidée de l'entretoise (07)) le piston inférieur (05) hors de la chambre d'échantillonnage (01) de façon à laisser entrer un fluide dans la chambre. En revanche, lorsque l'élément élastique (20) est détendu (figure 3 et 4), la tige (04) remonte le piston inférieur (05) pour fermer de façon étanche la chambre d'échantillonnage (01) dans sa partie inférieure.

Comme l'illustre les figures 1 et 2, le piston inférieur (05) peut être équipé d'une vanne pointeau (25) et d'un raccord haute pression permettant d'évacuer le fluide hors de la chambre d'échantillonnage (01), lorsque le dispositif est remonté, et que l'échantillon de fluide doit être analysé.

Un second piston (02), dit piston supérieur, est positionné dans la chambre (01), à son extrémité supérieure lorsque le fluide n'est pas en transfert hors de la chambre. Ce piston supérieur (02) est adapté à coulisser dans la chambre, d'une extrémité à une autre. Il possède un orifice central, permettant à une partie supérieure de la tige (04) de coulisser, et permettant une fermeture étanche avec une partie inférieure de la tige (04), le diamètre de la partie inférieure de la tige (04) étant supérieure à celui de la partie supérieure. Ainsi, lorsque l'élément élastique (20) est détendu, la tige (04) coopère avec le piston supérieur (02) pour fermer de façon étanche ladite chambre d'échantillonnage (01) dans sa partie supérieure. Pour ce faire, la tige (04) possède un épaulement qui vient boucher le trou du piston supérieur (02). Ce piston supérieur (02) peut être verrouillé par des vis de blocage (27) adaptées.

La chambre peut être fermée au niveau de sa partie supérieure par un élément du corps (10, 03, 08), appelé tube de jonction (10). Ce tube de jonction est fixé à un tube supérieur (08) par l'intermédiaire d'un autre tube (03).

### Fonctionnement du dispositif selon l'art antérieur

### Dispositif en position "ouverte" (figures 1, 2)

En position ouverte, le fluide sous pression circule librement au sein de la chambre d'échantillonnage (01). Dans cette position, le ressort (20) est armé et maintenu à un certain niveau (80 % par exemple) de sa compression par une poignée (23) reliée à l'axe du moteur (ou de l'horloge).

Dans cette configuration le piston inférieur (05) est en position basse. Le fluide du puits circule donc librement au travers de la chambre d'échantillonnage (pendant la descente du préleveur dans le puits par exemple). Dans la partie inférieure de la chambre, le fluide passe par les orifices de l'embout (06), le fluide remonte dans la chambre et passe entre la tige (04) et le piston supérieur (02). Un jeu de perçages et d'ouvertures permet au fluide de circuler par les orifices (ouvertures oblongues) de la virole (01).

Selon un mode réalisation, les orifices (ouvertures oblongues) de la chambre (01) et de l'embout (06) sont équipés d'une grille (avec un maillage de 80 µm par exemple) pour tamiser les particules solides du fluide.

### Dispositif en position "fermée" : verrouillage de la chambre d'échantillonnage (figure 3)

Pour déclencher le prélèvement de d'échantillon, le ressort (20) est libéré. Pour cela, on peut tourner une poignée (23) et dès qu'elle a effectué un quart de tour, elle se retrouve fasse à l'ouverture de la virole (09). Le ressort (20) est alors libéré et se détend entrainant avec lui : l'entretoise (07), la tige (04) et le piston inférieur (05). Comme la chambre du ressort est remplie d'huile, cette remontée se fait sans à-coup et ne perturbe pas le fluide prélevé.

Une fois le ressort détendu, le piston (05) se retrouve dans la partie inférieure de la virole (01) et l'étanchéité est assurée dans la partie inférieure de la chambre d'échantillonnage. Dans la partie supérieure c'est la tige (04) qui fait étanchéité sur le piston supérieure (02) grâce au diamètre plus large à la base de la tige. L'échantillon de fluide est isolé et étanche. Le préleveur peut être remonté à la surface.

Pour tourner la poignée (23), deux modes de réalisation sont décrits :
- Un opérateur en surface actionne le moteur électrique (24) le moment voulu. Ce moteur tourne la poignée (23).
- Une horloge embarquée et autonome actionne la poignée (23) à la date et l'heure programmées.

### Dispositif en position "transfert"

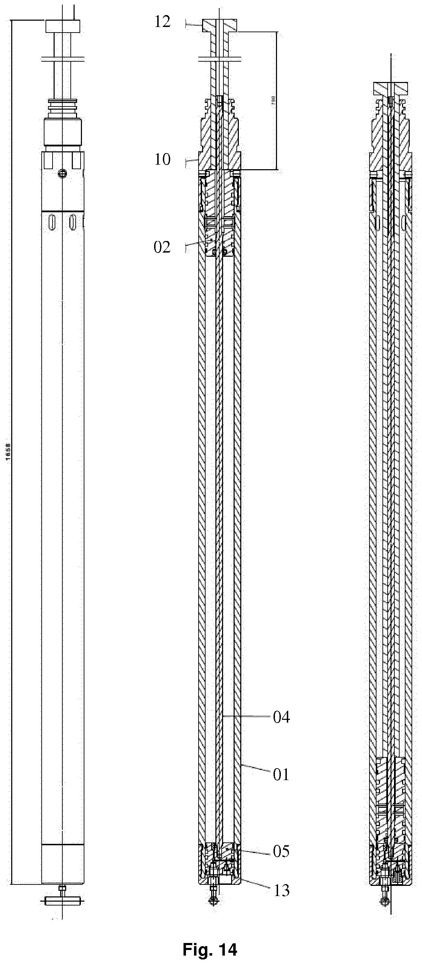

La figure 14 illustre la position du dispositif en mode « transfert ». La figure du milieu est une coupe selon l'axe A-A de la figure de gauche avec la chambre remplie de fluide, et la figure de droite est une coupe selon l'axe A-A de la figure de gauche avec la chambre vidée. Une fois le dispositif remonté en surface, on peut transférer l'échantillon de fluide. Pour cela, on peut :
- dévisser l'embout (06) et le remplacer par un embout (13), celui-ci permet de bloquer le piston inférieur (05) dans sa position, au sein de la chambre (01),
- purger l'huile de la chambre du ressort via la vanne pointeau (26) et récupérer l'huile en se connectant sur le raccord HP,
- démonter la partie "moteur et accroche" en dévissant le tube de jonction (11),
- dévisser le tube (8),
- retirer les écrous (22) et dévisser le goujon (21),
- dévisser le tube de jonction (03) puis le retirer avec l'entretoise d'appui (07) et le ressort (20),
- emmancher un piston de transfert (12) jusqu'à buter sur le piston supérieur (02),
- dévisser les vis de blocage (27),
- se connecter au raccord HP du piston inférieur (05),
- appliquer le mouvement de transfert du piston (12) sur le piston supérieur (02) et ouvrir la vanne pointeau (25), et
- le transfert est terminé une fois le piston supérieur (02) en appui sur le piston inférieur (05).

Le préleveur selon l'invention est un perfectionnement du dispositif de prélèvement décrit ci-dessus en référence aux figures 1 à 3.

Ainsi, le dispositif selon l'invention comporte au moins :
- une chambre d'échantillonnage (01)
- un corps (10, 03, 08) surmontant ladite chambre d'échantillonnage
- des moyens de circulation pour faire circuler le fluide dans ladite chambre,
- des moyens de maintien pour maintenir le fluide dans ladite chambre, et
- des moyens de transfert pour transférer le fluide hors de ladite chambre.

Le préleveur selon l'invention diffère du dispositif selon l'art antérieur par l'utilisation d'un troisième piston, dit piston intermédiaire, disposé entre les pistons inférieur et supérieur. Le piston intermédiaire a pour objectif de maintenir un volume sensiblement constant de la chambre lors de l'entrée et du maintien du fluide au sein de la chambre, c'est-à-dire lors de la fermeture de la chambre par le piston inférieur. Pour cela, le piston intermédiaire est maintenu à une distance sensiblement constante d'un des deux autres pistons (inférieur et supérieur) de manière à délimiter le volume de la chambre. On rappelle qu'un piston est une pièce mécanique rigide ou articulée se déplaçant dans une chambre pour assurer la variation du volume de la chambre ; un piston permet la conversion d'une pression en énergie mécanique ou inversement.

Le préleveur selon l'invention comporte par ailleurs des moyens de fermeture et d'ouverture de la chambre par déplacement du piston inférieur, et des moyens de déplacement du piston intermédiaire permettant de définir un volume sensiblement constant de la chambre lors de la fermeture de la chambre.

Le dispositif selon l'invention peut comporter par ailleurs les autres caractéristiques du préleveur selon l'art antérieur, par exemple : les moyens de fermeture et d'ouverture de ladite chambre qui déplacent le piston inférieur, les moyens de détente ou de compression de l'élément élastique, les orifices de circulation du liquide (embout),...

Selon un premier mode de réalisation de l'invention, le volume de la chambre est défini par le piston intermédiaire et le piston inférieur, c'est-à-dire que le piston intermédiaire est à distance sensiblement constante du piston inférieur. Le piston intermédiaire se déplace conjointement au piston inférieur lors du prélèvement (position "ouverte") et du maintien (position "fermée") du fluide, et se déplace conjointement au piston supérieur lors du transfert du fluide. Ainsi, lors du prélèvement (position "ouverte"), on forme lors du prélèvement une mini chambre à volume variable entre le piston intermédiaire et le piston supérieur et une chambre d'échantillonnage à volume sensiblement constant entre le piston intermédiaire et le piston inférieur.

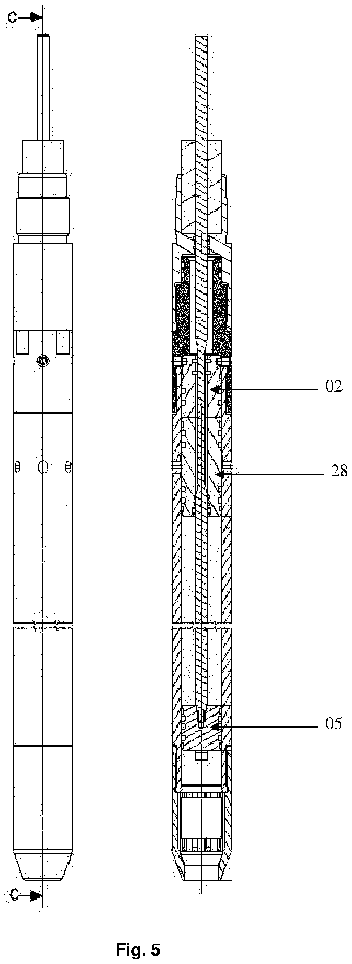

Les figures 4 et 5 illustrent ce premier mode de réalisation respectivement en position "ouverte" et en position "fermée". Sur ces figures, les références utilisées sont identiques aux signes des références des figures 1 à 3. Le piston intermédiaire (28) peut coulisser sur la tige (04).

En position "ouverte", le piston intermédiaire (28) est descendu et éloigné du piston supérieur (02), le piston inférieur (05) est descendu dans l'embout (06) de manière à laisser passer le fluide et le piston supérieur (02) est en position haute. Le fluide pénètre par la partie inférieure de la chambre de remplissage, une partie de fluide peut circuler vers la mini chambre à volume variable au travers du piston intermédiaire (28), notamment en son centre au niveau du passage de la tige (04) et peut s'écouler vers l'extérieur du préleveur à travers de perçages dans la virole (09).

En position "fermée", le piston intermédiaire (28) est déplacé vers le piston supérieur (02) et arrive en butée contre le piston supérieur (02), tous deux en position haute, le piston inférieur (05) est remonté et interdit le passage du fluide. Entre la position "ouverte" et la position "fermée" les déplacements des pistons inférieur (05) et intermédiaire (28) sont sensiblement identiques en conservant une distance d'espacement sensiblement constante.

Pour le transfert du fluide, selon une première variante de réalisation, les pistons supérieur (02) et intermédiaire (28) descendent conjointement de la partie supérieure de la chambre (01) à la partie inférieure de la chambre (01), de manière à ce que le fluide reste à pression constante dans la chambre lors du transfert. Selon une deuxième variante de réalisation, seul le piston intermédiaire (28) descend de la partie supérieure de la chambre (01) à la partie inférieure de la chambre (01).

Le coulissement du piston intermédiaire (28) s'effectue par le biais de la compressibilité du fluide qui est prélevé dans la partie basse de la chambre (01) et qui arrive en "butée" au niveau de la jonction tige-joint intermédiaire. Le déplacement du piston intermédiaire (28) s'effectue jusqu'à arriver au niveau du piston supérieur (02). Cette distance parcourue est équivalente à la distance nécessaire pour fermer le préleveur, c'est à dire pour que le piston inférieur (05) arrive au-delà des systèmes de circulation de fluide dans la partie basse jusqu'à obtenir une parfaite étanchéité.

Selon un deuxième mode de réalisation de l'invention, le volume de la chambre est défini par le piston intermédiaire et le piston supérieur, c'est-à-dire que la distance entre le piston intermédiaire et le piston supérieur est sensiblement constante. Le piston intermédiaire se déplace conjointement au piston supérieur lors du prélèvement (position "ouverte") et du maintien (position "fermée") du fluide, et se déplace lors du transfert du fluide. Ainsi, lors du prélèvement et du maintien, on forme lors du prélèvement une chambre d'échantillonnage à volume sensiblement constant entre le piston intermédiaire et le piston supérieur.

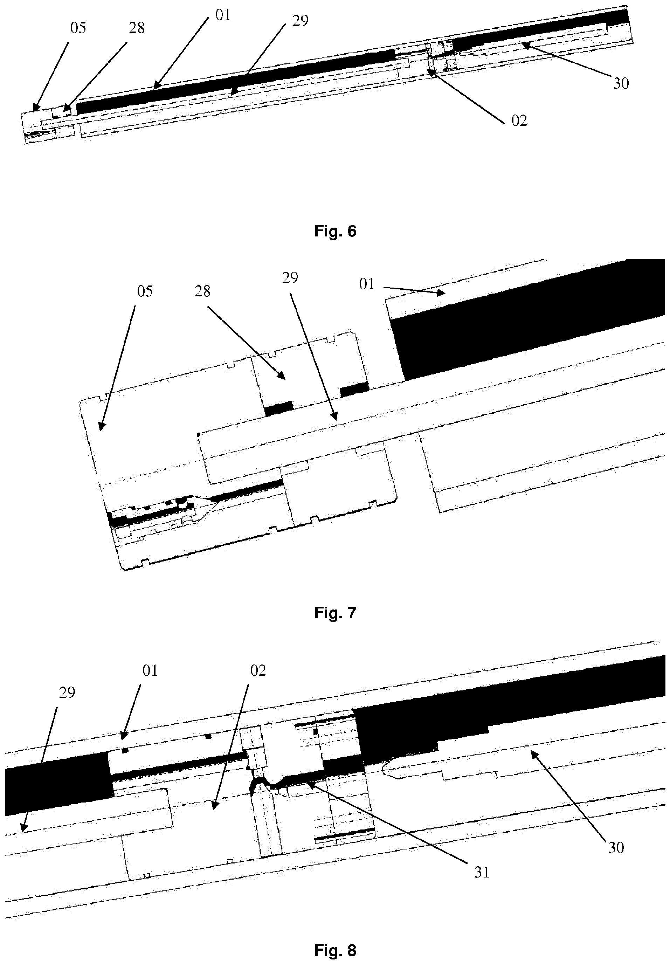

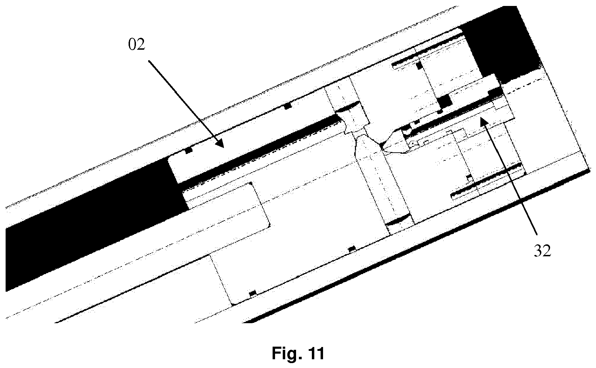

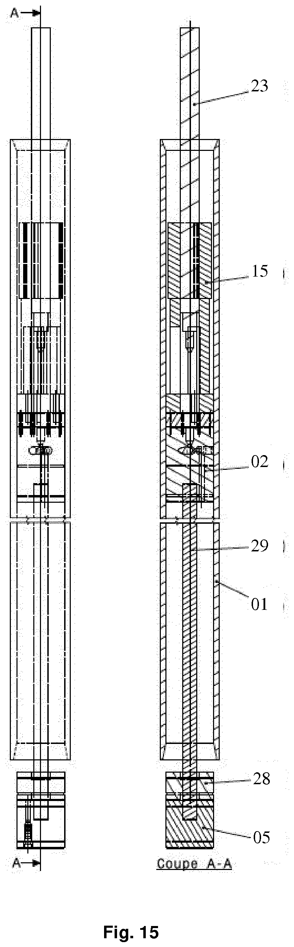

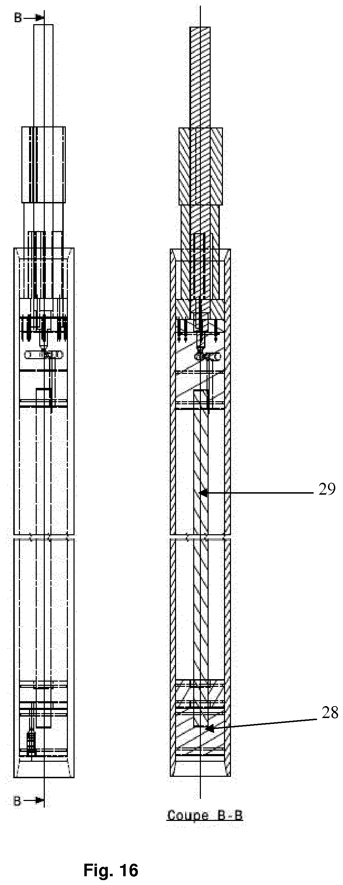

Les figures 6 à 11, 15 et 16 illustrent ce deuxième mode de réalisation en position "ouverte", en position "fermée" et en position "de transfert". Sur ces figures, les références utilisées sont identiques aux signes des références des figures 1 à 5.

La chambre (01) comportent deux pistons (02, 05) reliés par une barre de liaison (29) pouvant coulisser dans la chambre (01) et d'un piston intermédiaire (28) coulissant sur la barre de liaison (29). Le déplacement de l'équipage mobile (pistons inférieur (05) et supérieur (02) et barre de liaison (28)) dans la chambre (01) peut être assuré par un axe fileté muni d'une vanne pointeau (30) à une extrémité. Cet axe (30) peut être entrainé par un moteur électrique. Le piston supérieur (02) est muni d'une ouverture (31) permettant la circulation du fluide dans la chambre (01). La vanne pointeau (30) sert à fermer la chambre une fois le prélèvement effectué en bouchant l'ouverture (31) du piston supérieur.

Avant le prélèvement (position "ouverte"), le piston intermédiaire (28) est rendu solidaire du piston inférieur (02) par création d'une dépression entre ces pistons. L'ensemble pistons-barre de liaison (02, 05, 28, 29) est mis en position basse de façon à ce que le piston inférieur (02) et le piston intermédiaire (28) soient sortis du tube, ouvrant ainsi la partie basse de la chambre (01) et permettant l'entrée du fluide et que l'ouverture du piston supérieur (05) soit dégagée de sa vanne de fermeture (30) ce qui permet la circulation du fluide dans la chambre.

Pendant le déplacement du préleveur (en position "ouverte") jusqu'à la profondeur d'échantillonnage (figures 6 à 8 et 15), le fluide entrant par la partie inférieure de la chambre (01) circule dans la chambre (01) et ressort par l'ouverture (31) prévue à cet effet dans le piston supérieur (02), puis est évacué par des lumières situées en partie haute de la chambre (01).

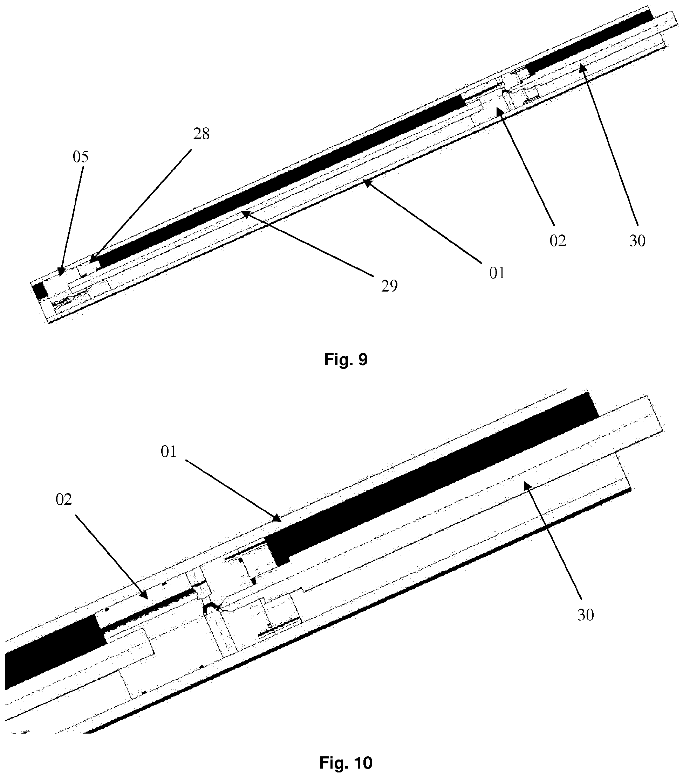

Lors du prélèvement, en position "fermée" (figures 9, 10 et 16), l'équipage mobile (02, 28, 05, 29) est ramené dans la chambre (01) ce qui a pour effet de fermer la partie basse de la chambre (01), de fermer l'ouverture (31) du piston supérieur (02) avec la vanne pointeau située à l'extrémité de l'axe fileté (30) permettant le déplacement, et d'emprisonner le fluide à analyser dans une chambre étanche à volume constant (01).

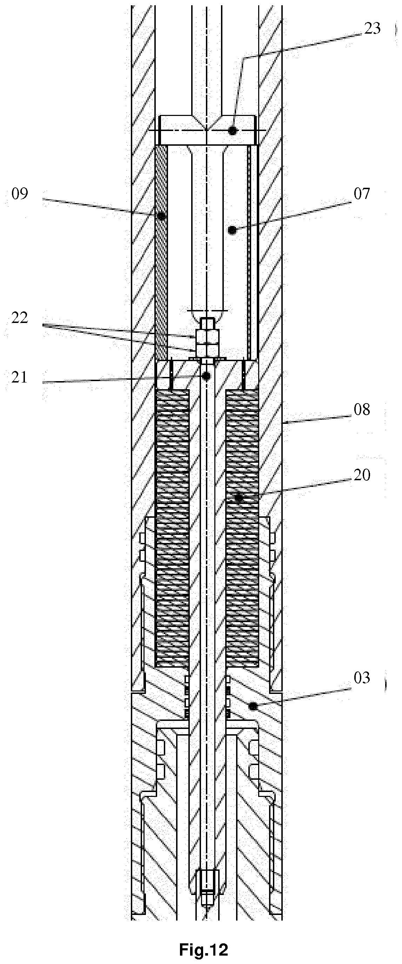

Une fois le préleveur remonté à la surface (figure 12), la fermeture d'une vanne d'arrêt annexe permet de démonter l'axe (30) permettant la translation avec sa vanne pointeau et de visser à sa place une vanne de transfert (32). En position fermée la vanne pointeau rend la chambre étanche. La vanne de fermeture annexe peut alors être ouverte. Après avoir relié le circuit d'analyse au conduit central de la vanne, il suffit de desserrer celle-ci pour ouvrir la chambre (01) et permettre à son contenu de s'écouler par le conduit. La totalité du contenu de la chambre (01) peut être transférée en augmentant la pression entre le piston inférieur (05) et le piston intermédiaire (28) par l'intermédiaire d'une vanne, ce qui a pour effet de chasser le piston intermédiaire (28) vers le piston supérieur (02) et de vider la chambre.

La figure 12 représente la partie centrale du dispositif selon l'invention. Le tube supérieur (08) comporte l'élément ressort (20) et des moyens (07, 22, 09, 23) pour le détendre ou le compresser. Ces moyens, permettant le déplacement d'au moins le piston inférieur (05) peuvent comprendre :
- une entretoise d'appui du ressort (07) avec un goujon (21) et ses écrous (22),
- une virole fendue (09) qui libère ou bloque le ressort en compression, et
- une poignée (23) qui maintient le ressort comprimé.

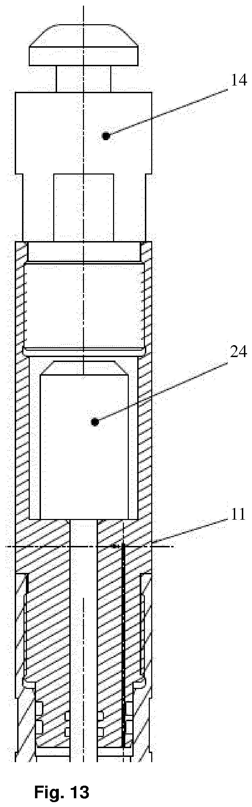

La figure 13 représente la partie supérieure du dispositif. Les moyens (07, 22, 09, 23) pour détendre ou compresser ledit élément ressort (20) peuvent être reliés à un moteur électrique, piloté en surface ou une horloge programmable (24). Cette partie moteur est située dans un tube de logement (11), qui est fixé au corps (10, 03, 08), au niveau du tube supérieur (08). Cette partie moteur est surmontée d'une pièce d'accroche (14) pour pouvoir attacher le dispositif à un câble et le descendre dans un puits.

Le moteur ou l'horloge (24) coopère avec la poignée (23) au moyen d'un axe.

Par ailleurs, le tube de logement (11) est équipé d'une vanne pointeau (26) et d'un raccord Haute Pression pour remplir en huile la chambre du ressort.

Ce dispositif présente également l'avantage de pouvoir être descendu en position ouverte dans le milieu souterrain, de manière à s'affranchir des problèmes d'ouverture au sein du milieu souterrain et pour permettre un remplissage complet de la chambre d'échantillonage.

### Utilisation du dispositif

L'invention concerne également un procédé de surveillance de l'exploitation d'un site géologique souterrain. Il peut s'agir de :
- la surveillance d'un site de stockage géologique de CO₂ ;
- la surveillance d'un site de stockage/soutirage de gaz naturel ;
- la surveillance d'un site de récupération assistée d'hydrocarbures par injection de gaz, notamment par injection de CO₂ ou
- la surveillance d'un site d'exploitation de gaz de schistes.

L'utilisation du dispositif selon l'invention, pour réaliser une surveillance de l'exploitation d'un site géologique souterrain par prélèvement de fluide sous pression au moyen d'un puits de surveillance, comprend alors les étapes suivantes :
- on actionne les moyens de circulation du dispositif de prélèvement pour le mettre en position "ouverte", par exemple en actionnant la poignée de façon à compresser l'élément élastique ;
- on descend le dispositif, en position « ouverte », dans le puits de surveillance, par exemple au moyen d'un câble attaché à la partie supérieure du dispositif ;
- on maintient le dispositif de prélèvement le dispositif en position « ouverte » à une profondeur déterminée, pendant une durée déterminée ;
- on actionne les moyens de maintien du dispositif pour le mettre en position "fermée", par exemple en actionnant la poignée de façon à libérer l'élément élastique ;
- on remonte le dispositif en surface par exemple au moyen du câble ;
- on transfert le fluide hors de la chambre du dispositif, en actionnant les moyens de transfert, par exemple en poussant le piston supérieur tout en contrôlant la pression au moyen d'un capteur de pression, de façon à ce que la pression dans la chambre reste constante ; et
- on réalise des analyses du fluide prélevé telles que : analyse des espèces aqueuses cationiques et anioniques, analyse des éléments dits "traces", analyses du carbone organique et inorganique dissous, analyses des gaz dissous (majeurs et gaz rares).

L'ensemble des analyses est interprété et permet de déterminer notamment si une fuite de CO₂ est présente au niveau du site de stockage et de quel type de fuite il s'agit.

Pour tourner la poignée, deux modes de réalisation sont possibles :
- un opérateur en surface actionne le moteur électrique (24) le moment voulu. Ce moteur tourne la poignée (23), ou
- une horloge embarquée et autonome actionne la poignée (23) à la date et l'heure programmées.

Le dispositif selon l'invention peut être également utilisé pour prélever des fluides sous pressions dans une canalisation, un tube, un conduit, un réservoir ou analogue dans le but d'analyser ces fluides.

## Revendications

1. Dispositif de prélèvement d'au moins un fluide sous pression, comportant une chambre d'échantillonnage (01) définissant un volume interne pour recevoir ledit fluide, **caractérisé en ce que** ledit dispositif comporte un piston inférieur (05) disposé dans la partie inférieure de ladite chambre (01), un piston supérieur (02) disposé dans la partie supérieure de ladite chambre (01), un piston intermédiaire (28) disposé entre lesdits pistons inférieur (05) et supérieur (02), des moyens de fermeture et d'ouverture de ladite chambre (01) par déplacement dudit piston inférieur (05), et des moyens de déplacement dudit piston intermédiaire (28) permettant de définir un volume sensiblement constant de ladite chambre (01) lors de la fermeture de ladite chambre (01).

2. Dispositif selon la revendication 1, dans lequel le volume de ladite chambre (01) est défini par ledit piston intermédiaire (28) et ledit piston inférieur (05).

3. Dispositif selon la revendication 2, dans lequel ledit piston intermédiaire (28) est à une distance sensiblement constante dudit piston inférieur (05) en position ouverte et en position fermée de ladite chambre (01), ledit piston intermédiaire (28) étant en butée contre ledit piston supérieur (02) lorsque ladite chambre (01) est en position fermée.

4. Dispositif selon l'une des revendications 2 ou 3, dans lequel ledit dispositif comporte des moyens de transfert du fluide hors de la chambre, lesdits moyens de transfert comprenant des moyens pour contrôler la descente conjointe dudit piston supérieur (02) et dudit piston intermédiaire (28) de la partie supérieure vers la partie inférieure de ladite chambre (01).

5. Dispositif selon la revendication 1, dans lequel le volume de ladite chambre est défini par ledit piston intermédiaire (28) et ledit piston supérieur (02).

6. Dispositif selon la revendication 5, dans lequel ledit piston intermédiaire (28) est à une distance sensiblement constante dudit piston supérieur (02) en position ouverte et en position fermée de ladite chambre (01), ledit piston intermédiaire (28) étant en butée contre ledit piston inférieur (05) en position ouverte et en position fermée de ladite chambre (01).

7. Dispositif selon l'une des revendications 5 ou 6, dans lequel lesdits pistons supérieur (02) et inférieur (05) sont reliés par une barre de liaison (29) sur laquelle coulisse ledit piston intermédiaire (28).

8. Dispositif selon l'une des revendications 5 à 7, dans lequel ledit piston supérieur (02) est muni d'une ouverture (31) permettant la circulation du fluide hors de ladite chambre (01), ladite ouverture (31) pouvant être fermée par une vanne pointeau (30).

9. Dispositif selon l'une des revendications 5 à 8, dans lequel ledit dispositif comporte des moyens de transfert du fluide hors de la chambre, lesdits moyens de transfert comprennent des moyens pour déplacer ledit piston intermédiaire (28) du piston inférieur vers le piston supérieur de ladite chambre (01).

10. Dispositif selon l'une des revendications précédentes, dans lequel les moyens d'ouverture et de fermeture de ladite chambre comportent un élément rectiligne (04) lié au piston inférieur et à un élément ressort (20), de façon à ce qu'en position ouverte ledit élément ressort (20) est comprimé.

11. Dispositif selon l'une des revendications précédentes, dans lequel ledit piston inférieur (05) est équipé d'une vanne pointeau (25) et d'un raccord Haute Pression permettant d'évacuer ledit fluide hors de la dite chambre d'échantillonnage (01).

12. Utilisation du dispositif selon l'une des revendications précédentes, dans laquelle on réalise une surveillance de l'exploitation d'un site géologique souterrain par prélèvement de fluide dans un puits de surveillance, **caractérisée en ce qu'**on réalise les étapes suivantes :
a) on actionne lesdits moyens de fermeture et d'ouverture de ladite chambre (01) dudit dispositif de prélèvement pour le mettre en position "ouverte" ;
b) on descend le dispositif, en position « ouverte », dans le puits de surveillance ;
c) on maintient ledit dispositif en position « ouverte » à une position déterminée ;
d) on actionne lesdits moyens de fermeture et d'ouverture de ladite chambre (01) dudit dispositif de prélèvement pour le mettre en position « fermée » ; et
e) on remonte ledit dispositif en surface.

13. Utilisation selon la revendication 12, dans laquelle on réalise en outre les étapes suivantes :
f) on transfère ledit fluide hors de ladite chambre du dispositif, en actionnant des moyens de transfert du fluide ; et
g) on réalise au moins une analyse du fluide prélevé.

14. Utilisation selon l'une des revendications 12 ou 13, dans lequel l'exploitation d'un site géologique souterrain consiste en la surveillance d'un site de stockage géologique de CO₂, ou en la surveillance d'un site de stockage/soutirage de gaz naturel, ou en la surveillance d'un site d'exploitation de gaz de schistes, ou en la surveillance de site de récupération assistée d'hydrocarbures par injection de gaz, notamment du CO₂.

## Patentansprüche

1. Vorrichtung zur Entnahme von mindestens einem unter Druck stehenden Fluid, umfassend eine Probenkammer (01), die ein Innenvolumen zum Aufnehmen des Fluids definiert, **dadurch gekennzeichnet, dass** die Vorrichtung einen unteren Kolben (05), der im unteren Teil der Kammer (01) angeordnet ist, einen oberen Kolben (02), der in dem oberen Teil der Kammer (01) angeordnet ist, einen Zwischenkolben (28), der zwischen dem unteren (05) und dem oberen (02) Kolben angeordnet ist, Mittel zum öffnen und Schließen der Kammer (01) durch Verschieben des unteren Kolbens (05) und Mittel zum Verschieben des Zwischenkolbens (28) aufweist, die ermöglichen, ein im Wesentlichen konstantes Volumen der Kammer (01) beim Schließen der Kammer (01) zu definieren.

2. Vorrichtung nach Anspruch 1, wobei das Volumen der Kammer (01) durch den Zwischenkolben (28) und den unteren Kolben (05) definiert ist.

3. Vorrichtung nach Anspruch 2, wobei der Zwischenkolben (28) in einem im Wesentlichen konstanten Abstand von dem unteren Kolben (05) in geöffneter und geschlossener Position der Kammer (01) ist, wobei der Zwischenkolben (28) in Anschlag gegen den oberen Kolben (02) ist, wenn die Kammer (01) in geschlossener Position ist.

4. Vorrichtung nach einem der Ansprüche 2 oder 3, wobei die Vorrichtung Mittel zum Transfer des Fluids aus der Kammer aufweist, wobei die Mittel zum Transfer Mittel aufweisen, um die gemeinsame Abwärtsbewegung des oberen Kolbens (02) und des Zwischenkolbens (28) des oberen Teils in Richtung des unteren Teils der Kammer (01) zu steuern.

5. Vorrichtung nach Anspruch 1, wobei das Volumen der Kammer durch den Zwischenkolben (28) und den oberen Kolben (02) definiert ist.

6. Vorrichtung nach Anspruch 5, wobei der Zwischenkolben (28) in einem im Wesentlichen konstanten Abstand von dem oberen Kolben (02) in geöffneter und in geschlossener Position der Kammer (01) ist, wobei der Zwischenkolben (28) in Anschlag gegen den unteren Kolben (05) in geöffneter und in geschlossener Position der Kammer (01) ist.

7. Vorrichtung nach einem der Ansprüche 5 oder 6, wobei der obere (02) und untere (05) Kolben durch eine Verbindungsstange (29) verbunden sind, auf der der Zwischenkolben (28) gleitet.

8. Vorrichtung nach einem der Ansprüche 5 bis 7, wobei der obere Kolben (02) mit einer Öffnung (31) versehen ist, die das Zirkulieren des Fluids aus der Kammer (01) heraus ermöglicht, wobei die Öffnung (31) durch ein Nadelventil (30) geschlossen werden kann.

9. Vorrichtung nach einem der Ansprüche 5 bis 8, wobei die Vorrichtung Mittel zum Transfer des Fluids aus der Kammer heraus aufweist, wobei die Mittel zum Transfer Mittel aufweisen, um den Zwischenkolben (28) des unteren Kolbens in Richtung des oberen Kolbens der Kammer (01) zu verschieben.

10. Vorrichtung nach einem der vorhergehenden Ansprüche, wobei die Mittel zum Öffnen und Schließen der Kammer ein geradliniges Element (04) aufweisen, das mit dem unteren Kolben und einem Federelement (20) derart verbunden ist, dass das Federelement (20) in geschlossener Position zusammengedrückt ist.

11. Vorrichtung nach einem der vorhergehenden Ansprüche, wobei der untere Kolben (05) mit einem Nadelventil (25) und einem Hochdruckanschluss ausgestattet ist, der ermöglicht, das Fluid aus der Probenkammer (01) heraus zu evakuieren.

12. Verwendung der Vorrichtung nach einem der vorhergehenden Ansprüche, wobei eine Überwachung der Nutzung einer unterirdischen geologischen Lagerstätte durch Entnahme von Fluid aus einem Überwachungsbohrloch durchgeführt wird, **dadurch gekennzeichnet, dass** die folgenden Schritte durchgeführt werden:
a) die Mittel zum Öffnen und Schließen der Kammer (01) der Vorrichtung zur Entnahme werden betätigt, um sie in "geöffnete" Position zu bringen;
b) die Vorrichtung wird in "geöffneter" Position in das Überwachungsbohrloch gesenkt;
c) die Vorrichtung wird in "geöffneter" Position in einer bestimmten Position gehalten;
d) die Mittel zum Öffnen und Schließen der Kammer (01) der Vorrichtung zur Entnahme werden betätigt, um sie in "geschlossene" Position zu bringen und
e) die Vorrichtung wird an die Oberfläche hochgebracht.

13. Verwendung nach Anspruch 12, wobei ferner die folgenden Schritte durchgeführt werden:
f) das Fluid wird aus der Kammer der Vorrichtung heraus transferiert, indem Mittel zum Transfer des Fluids betätigt werden, und
g) es wird mindestens eine Analyse des entnommenen Fluids durchgeführt.

14. Verwendung nach einem der Ansprüche 12 oder 13, wobei die Nutzung der unterirdischen geologischen Lagerstätte in der Überwachung einer geologischen Speicherstätte von CO₂ oder in der Überwachung einer Speicherstätte/Entnahmestelle von Erdgas oder in der Überwachung einer Schiefergasgewinnungsstätte oder in der Überwachung einer Stätte zur unterstützen Gewinnung von Kohlenwasserstoffen durch Injektion von Gas, insbesondere von CO₂ besteht.

## Claims

1. A device for sampling at least one fluid under pressure, comprising a sample chamber (01) defining an inner volume intended to receive said fluid, **characterized in that** said device comprises a lower piston (05) arranged in the lower part of said chamber (01), an upper piston (02) arranged in the upper part of said chamber (01), an intermediate piston (28) arranged between said lower (05) and upper (02) pistons, means for closing and opening said chamber (01) by moving said lower piston (05), and means for moving said intermediate piston (28) allowing to define a substantially constant volume for said chamber (01) upon closing of said chamber (01).

2. A device as claimed in claim 1, wherein the volume of said chamber (01) is defined by said intermediate piston (28) and said lower piston (05).

3. A device as claimed in claim 2, wherein said intermediate piston (28) is at a substantially constant distance from said lower piston (05) in open position and in closed position of said chamber (01), said intermediate piston (28) resting against said upper piston (02) when said chamber (01) is in closed position.

4. A device as claimed in any one of claims 2 or 3, wherein said device comprises means for transferring the fluid out of the chamber, said transfer means comprising means for controlling the joint descent of said upper piston (02) and of said intermediate piston (28) from the upper part to the lower part of said chamber (01).

5. A device as claimed in claim 1, wherein the volume of said chamber is defined by said intermediate piston (28) and said upper piston (02).

6. A device as claimed in claim 5, wherein said intermediate piston (28) is at a substantially constant distance from said upper piston (02) in open position and in closed position of said chamber (01), said intermediate piston (28) resting against said lower piston (05) in open position and in closed position of said chamber (01).

7. A device as claimed in any one of claims 5 or 6, wherein said upper (02) and lower (05) pistons are connected by a connecting rod (29) on which said intermediate piston (28) slides.

8. A device as claimed in any one of claims 5 to 7, wherein said upper piston (02) is provided with a port (31) allowing circulation of the fluid outside said chamber (01), and said port (31) can be shut by a needle valve (30).

9. A device as claimed in any one of claims 5 to 8, wherein said device comprises means for transferring the fluid out of the chamber, said transfer means comprising means for moving said intermediate piston (28) from the lower piston towards the upper piston of said chamber (01).

10. A device as claimed in any one of the previous claims, wherein the means for opening and closing said chamber comprise a rectilinear element (04) linked to the lower piston and to a spring element (20) so that, in open position, said spring element (20) is compressed.

11. A device as claimed in any one of the previous claims, wherein said lower piston (05) is equipped with a needle valve (25) and a High Pressure connection allowing said fluid to be discharged from said sample chamber (01).

12. Use of the device as claimed in any one of the previous claims, wherein the exploitation of an underground geological site is monitored through fluid sampling in a monitoring well, **characterized in that** the following stages are carried out:
a) actuating said means for closing and opening said chamber (01) of said sampling device so as to bring it into "open" position,
b) lowering the device, in "open" position, into the monitoring well,
c) holding said device in "open" position in a predetermined position,
d) actuating said means for closing and opening said chamber (01) of said sampling device so as to bring it into "closed" position, and
e) bringing said device back to the surface.

13. Use as claimed in claim 12, wherein the following stages are furthermore carried out:
f) transferring said fluid out of said chamber of the device by actuating fluid transfer means, and
g) performing at least one analysis of the sampled fluid.

14. Use as claimed in any one of claims 12 or 13, wherein the exploitation of an underground geological site consists in monitoring a geological CO₂ storage site or monitoring a natural gas storage/withdrawal site or monitoring a shale gas exploitation site or monitoring enhanced oil recovery sites using gas injection, notably CO₂.
